# EUROPEAN PATENT APPLICATION

(11) **EP 2 154 014 A1**
(43) Date of publication of application: **17.02.2010**
(21) Application number: 08014385.2
(22) Date of filing: 12.08.2008
(51) Int. Cl.: B60J 1/20, B60J 5/04

(54) **Car-use rain-shedding device**

(71) Applicant: Chang, Heng-Hao, Shihlin Taipei City 111 (TW)
(72) Inventor: Chang, Heng-Hao, Shihlin Taipei City 111 (TW)
(74) Representative: Becker Kurig Straus

(57) **Abstract**

A car-use rain-shedding device is connected between a default door (4) frame and a default body (3) of an automobile, and is provided with a rain-shedding sheet (5). A side of the rain-shedding sheet is connected to an upper rim of the default door frame, and the other side is connected to an upper rim of the car body. By opening and closing the default door frame, expansion and collection in a pie-shape can be formed, such that when in a rainy day, the practicability and progressiveness can be achieved that people will not get wet while opening the car door to get into or off the car in the rainy day.

## Description

### BACKGROUND OF THE INVENTION

### a) Field of the Invention

The present invention relates to a rain-shedding device, and more particularly to a car-use rain-shedding device 2 which is able to prevent a user from getting wet when he or she opens a car door to get into or get off the car.

### b) Description of the Prior Art

In order to decrease transportation time, people will usually take a vehicle. A vehicle is generally divided into a mass transportation carrier and an individual transportation vehicle. However, people will usually have a different need to a destination, and if the destination to reach cannot be achieved by the mass transportation carrier, then the individual transportation vehicle will become the most widely used one.

According to its structure, an individual transportation vehicle can be divided into a bicycle, a motorcycle and an automobile. Due to its structure, when riding the bicycle or the motorcycle, there will be no shed at all. Therefore, when outdoor weather is unstable, people will need to wear a rain coat to cover from wind and rain, and it is easy to increase a risk of danger in riding due to the wind and rain. Accordingly, an automobile becomes the most widely used vehicle at present.

Nevertheless, while using the aforementioned automobile, following problems and shortcomings actually exist to be improved.

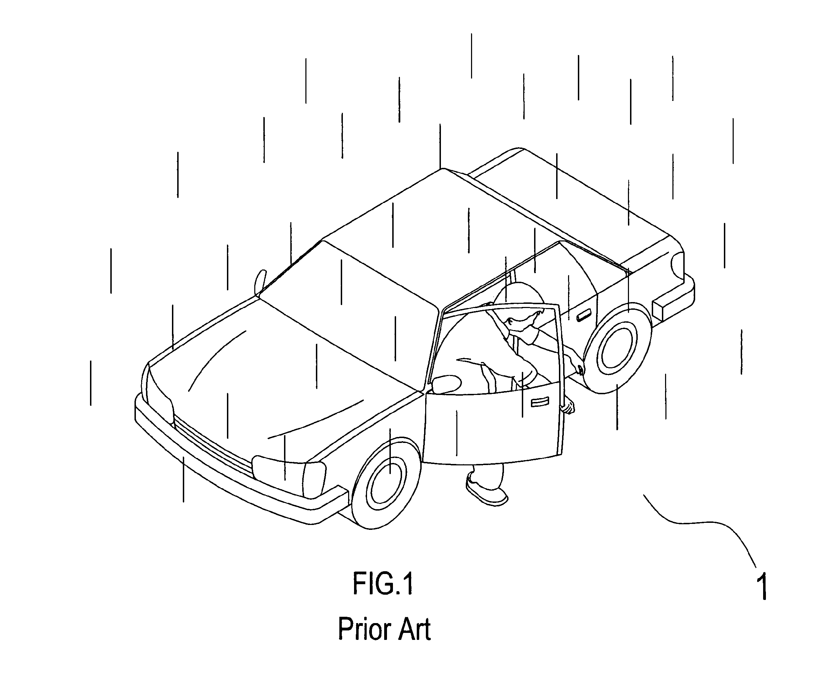

Referring to FIG. 1, it shows a schematic view of a person getting into or off an automobile in a conventional way, wherein although a person will not get wet by rain by taking an automobile 1 when it is raining, he or she needs to open an umbrella or put on a rain coat first before opening a door of the automobile 1 to get into or get off that he or she will not get wet by the rain, which causes inconvenience.

Accordingly, how to eliminate the aforementioned problems and shortcomings of the prior art is an aim of research and development for improvement by the present inventor and related vendors.

### SUMMARY OF THE INVENTION

The primary object of the present invention is to provide a car-use rain-shedding device, which is installed between a default door frame and a default body of an automobile, and is provided with a rain-shedding sheet, a side of which is connected to an upper rim of the default car body, the other side of which is connected to an upper rim of the default door frame, and which is connected to the default car body and the default door frame by snaps, hooks, chains, buttons, bands or Velcro tapes. When the default door frame is opened and closed, expansion and collection in a pie-shape can be formed. By the aforementioned technologies, the problem existing in a conventional automobile that people can get wet while getting into or off the car in a rainy day can be solved, thereby achieving the practicability and progressiveness that people will not get wet while getting into or off the car in the rainy day.

Another object of the present invention is to provide a car-use rain-shedding device, which is further provided with a rolling device, with the rolling device being provided on the default car body, a side of the rain-shedding sheet being fixed at the rolling device, the other side of the rain-shedding sheet being provided with a hook, and the upper rim of the default door frame being provided with a loop, such that when the rain-shedding device is needed, the rain-shedding sheet can be set up completely only by engaging the hook with the loop on the upper rim of the door frame. On the other hand, by using the rolling device, when the car door is closed, the rain-shedding sheet can be rolled back and collected by the rolling device that it can prevent the rain-shedding sheet from being damaged. By the aforementioned technologies, the present invention is provided with a function of collecting the rain-shedding sheet, thereby achieving the practicability and progressiveness that the conventional automobile is not equipped with.

To enable a further understanding of the said objectives and the technological methods of the invention herein, the brief description of the drawings below is followed by the detailed description of the preferred embodiments.

### BRIEF DESCRIPTION OF THE DRAWINGS

FIG. 1 shows a schematic view of a person getting into or off an automobile in a conventional way.
FIG. 2 shows a first three-dimensional view of a preferred embodiment of the present invention.
FIG. 2A shows a second three-dimensional view of a preferred embodiment of the present invention.
FIG. 3 shows a first constitutional diagram of a preferred embodiment of the present invention.
FIG. 3A shows a second constitutional diagram of a preferred embodiment of the present invention.
FIG. 4 shows a third constitutional diagram of a preferred embodiment of the present invention.
FIG. 4A shows a local exploded view of FIG. 4.
FIG. 5 shows a fourth constitutional diagram of a preferred embodiment of the present invention.
FIG. 6 shows a fifth constitutional diagram of a preferred embodiment of the present invention.
FIG. 7 shows a first constitutional diagram of another preferred embodiment of the present invention.
FIG. 7A shows a local exploded view of FIG. 7.
FIG. 8 shows a second constitutional diagram of another preferred embodiment of the present invention.
FIG. 8A shows a third constitutional diagram of another preferred embodiment of the present invention.
FIG. 9 shows a first constitutional diagram of still another preferred embodiment of the present invention.
FIG. 9A shows a local exploded view of FIG. 9.
FIG. 10 shows a second constitutional diagram of still another preferred embodiment of the present invention.
FIG. 10A shows a third constitutional diagram of still another preferred embodiment of the present invention.

### DETAILED DESCRIPTION OF THE PREFERRED EMBODIMENTS

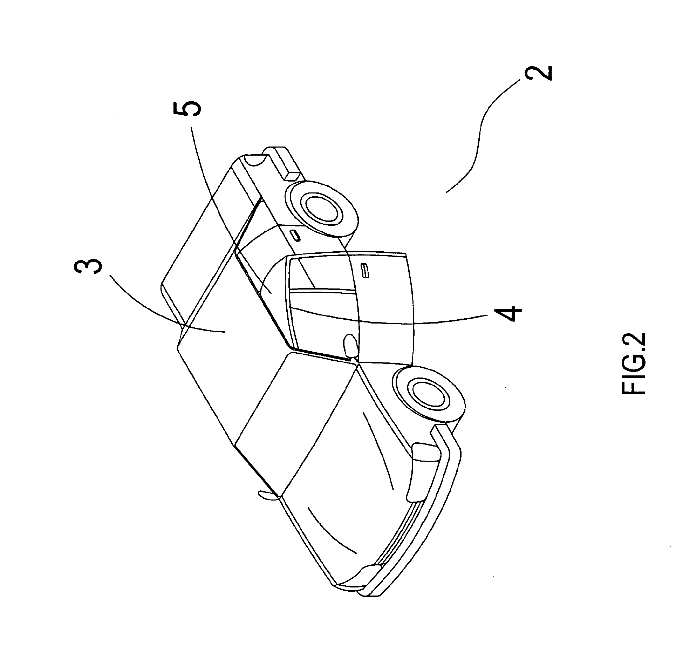

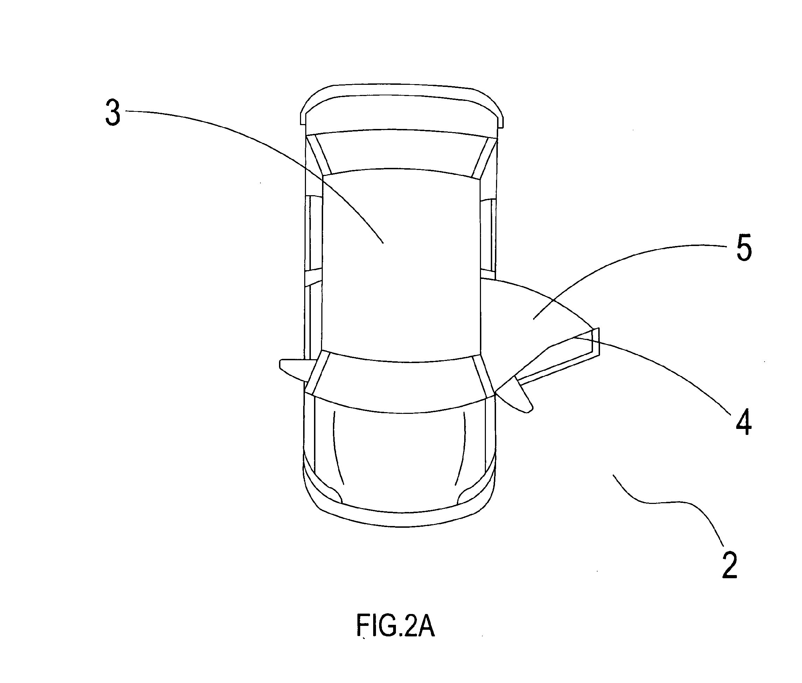

Referring to FIG. 2 and FIG. 2A, it shows a first three-dimensional view and a second three-dimensional view, of a preferred embodiment of the present invention. A rain-shedding device 2 of the present invention is connected between a car body 3 and a door frame 4, and includes a rain-shedding sheet 5 which is plastic cloth, rubber cloth or water-proof cloth. A side of the rain-shedding sheet 5 is connected to an upper rim of the car body 3, and the other side is connected to an upper rim of the door frame 4. By opening and closing the door frame 4, expansion and collection in a pie-shape can be formed, such that when a person gets into or off a car in a rainy day, he or she can be shed from rain.

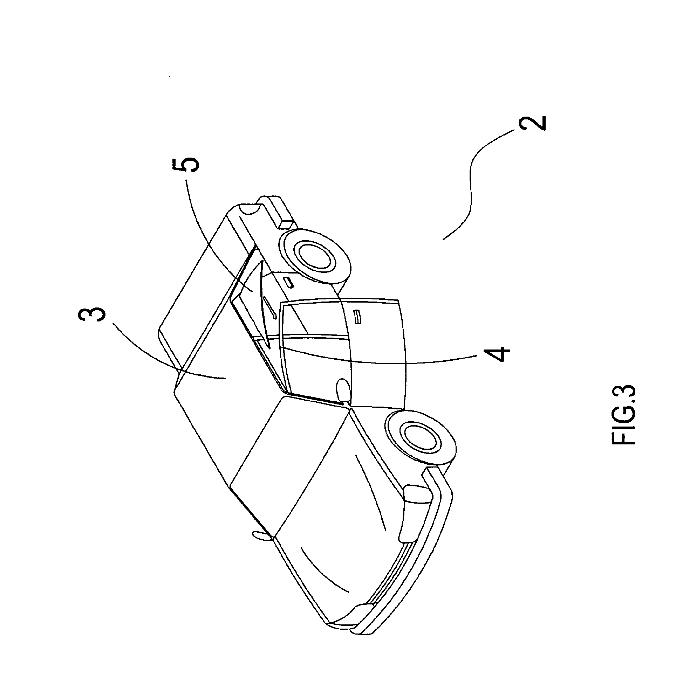

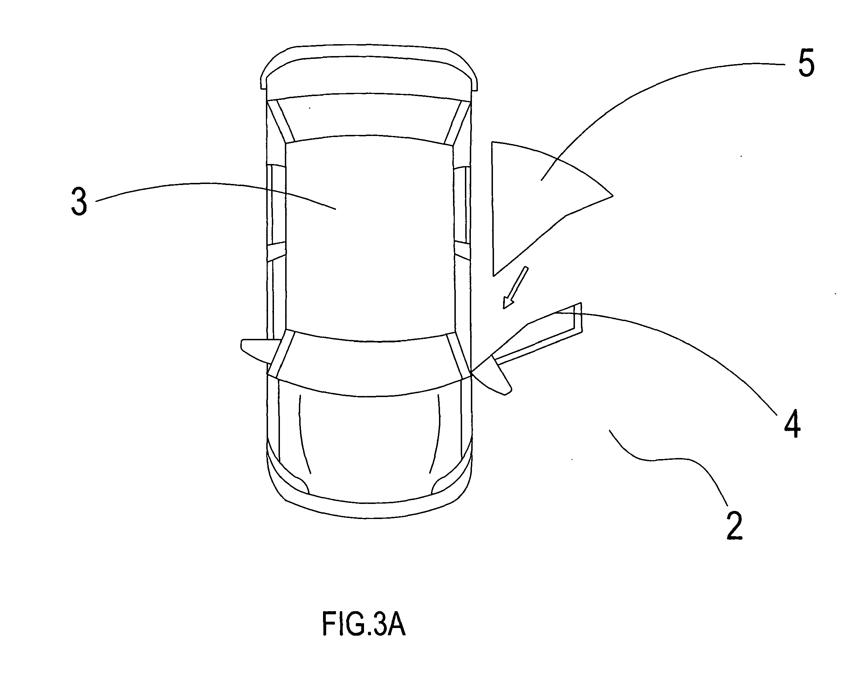

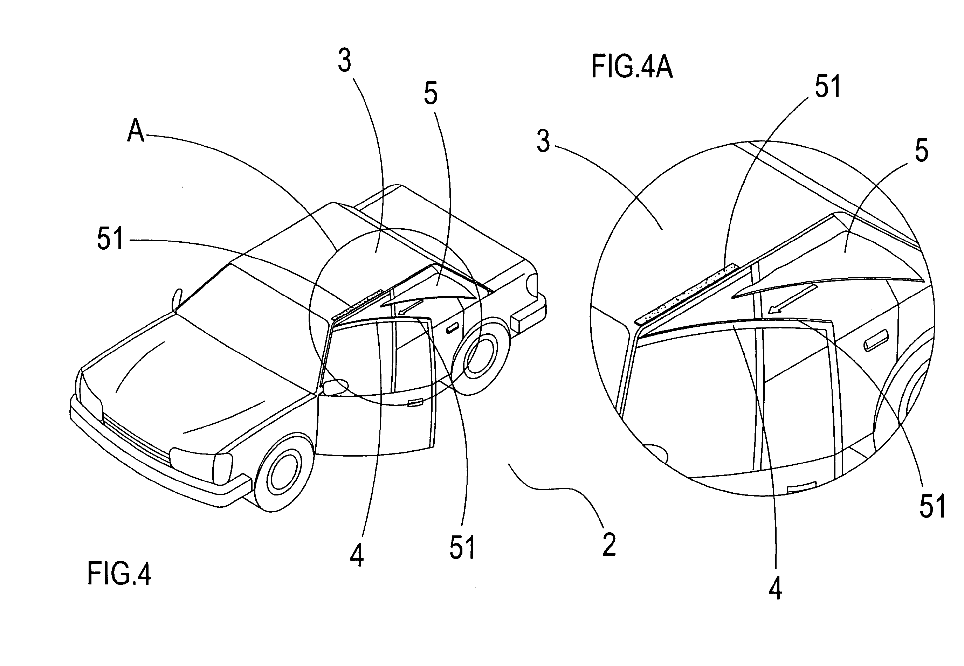

Referring to FIGS. 3, 3A, 4 and 4A, it shows a first constitutional diagram, a second constitutional diagram and a third constitutional diagram of a preferred embodiment of the present invention, as well as a local exploded view of FIG. 4. When constituting the rain-shedding device 2 of the present invention, the rain-shedding sheet 5 is connected between the car body 3 and the door frame 4 by Velcro tapes 51, such that when it is a sunny day or the rain-shedding sheet 5 is not required, the rain-shedding sheet 5 can be dismantled and taken down. In addition, the rain-shedding sheet 5 is connected to the upper rim of the door frame 4 and the upper rim of the car body 3 by snaps, hooks, chains, buttons, bands or the Velcro tapes 51.

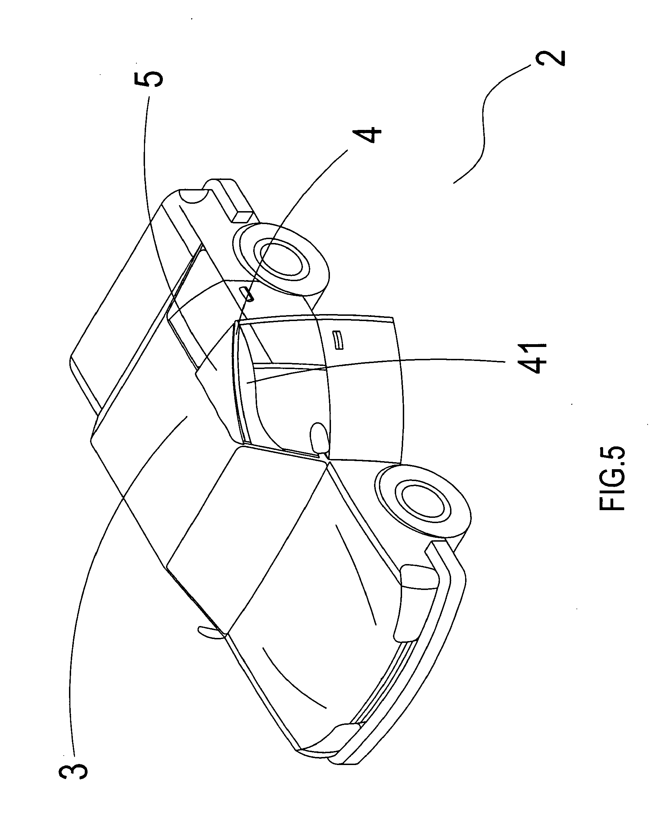

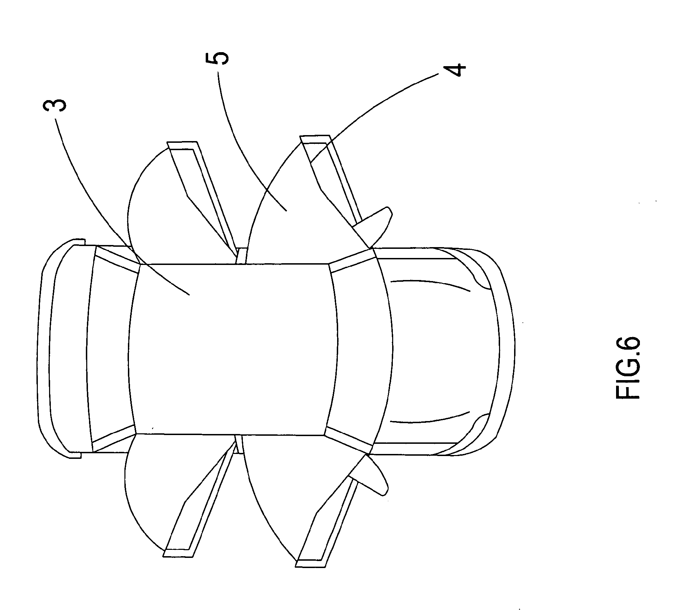

Referring to FIGS. 4, 4A, 5 and 6, it shows a third constitutional diagram of a preferred embodiment of the present invention, a local exploded view of FIG. 4, as well as a fourth and a fifth constitutional diagram of a preferred embodiment of the present invention. The door frame 4 of the rain-shedding device 2 of the present invention can be further provided with a window visor 41 which can be connected to the rain-shedding sheet 5. In addition, the rain-shedding sheet 5 is connected to the window visor 41 by snaps, hooks, chains, buttons, bands or the Velcro tapes 51. Moreover, the car body 3 can be connected to at least one rain-shedding sheet 5 and each rain-shedding sheet 5 is connected respectively to each door frame 4.

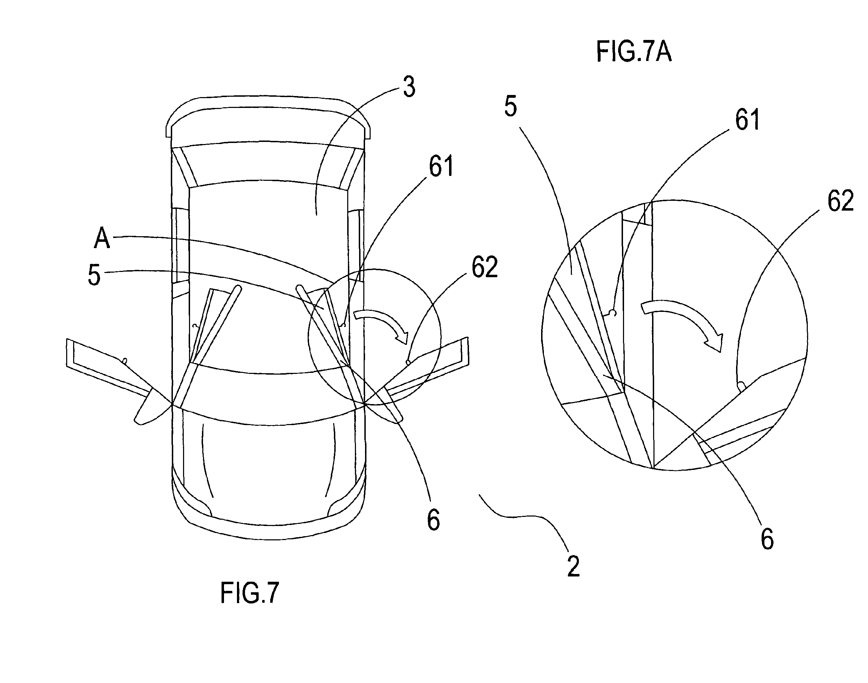

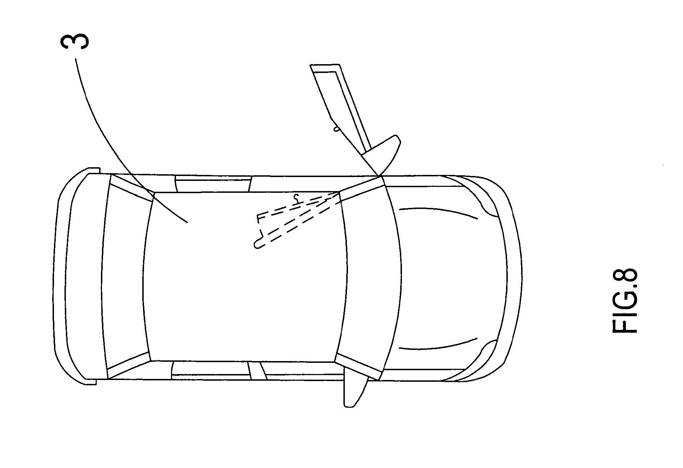

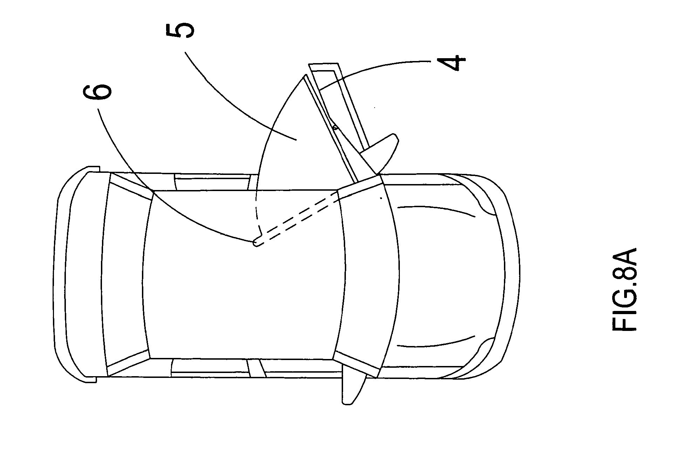

Referring to FIGS. 7, 7A, 8 and 8A, it shows a first constitutional diagram of another preferred embodiment of the present invention, a local exploded view of FIG. 7, as well as a second and a third constitutional diagram of another preferred embodiment of the present invention. On or inside the car body 3 of the present invention a rolling device 6 can be further fixed, the rolling device 6 is connected to the car body 3 and is elastically rolled with the rain-shedding sheet 5. The rain-shedding sheet 5 is connected to the door frame 4 by snaps, hooks, chains, buttons, bands or the Velcro tapes, a side of the rain-shedding sheet 5 is fixed at the rolling device 6, and the other side of the rain-shedding sheet 5 is provided with a hook 61; whereas, an upper rim of the door frame 4 is provided with a loop 62. When the rain-shedding device 2 is not used, the rain-shedding sheet 5 can be rolled elastically into the rolling device 6; on the other hand, when the rain-shedding device 2 is needed, the rain-shedding sheet 5 can be set up completely only by engaging the hook 61 at one side of the rain-shedding sheet 5 with the loop 62 on the upper rim of the door frame 4, such that by the rolling device 6, the rain-shedding sheet 5 can be collected and rolled back into the rolling device 6 to prevent from being damaged, when closing the door.

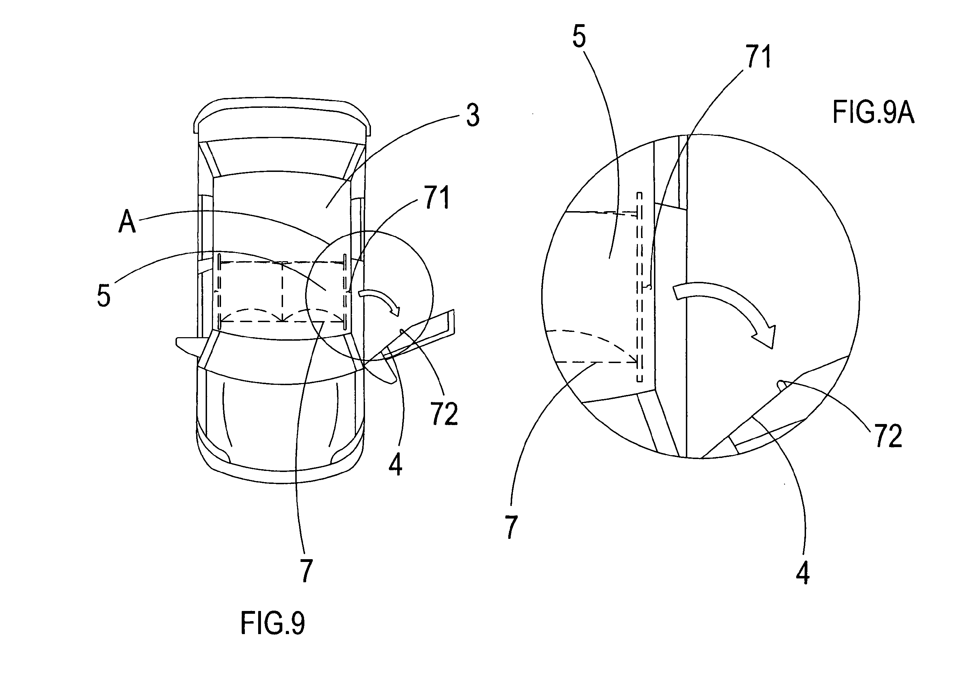

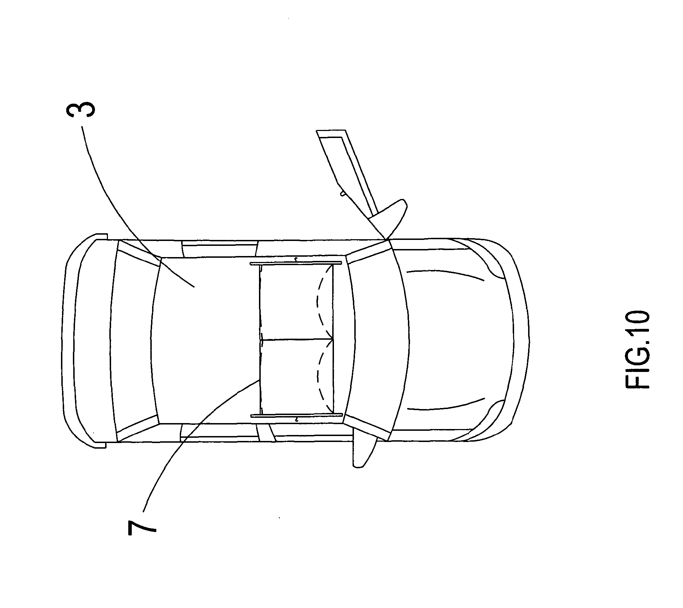

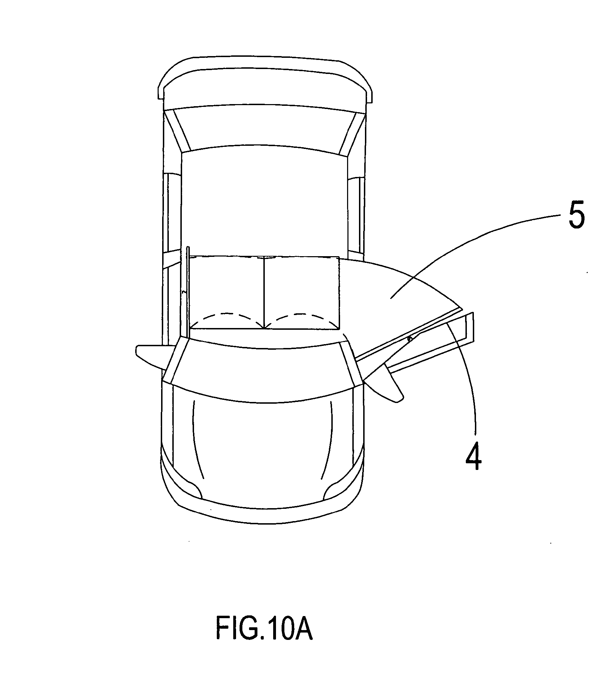

Referring to FIGS. 9, 9A, 10 and 10A, it shows a first constitutional diagram of still another preferred embodiment of the present invention, a local exploded view of FIG. 9, as well as a second and a third constitutional diagram of still another preferred embodiment of the present invention. On a top or inside the car body 3 is further provided with a box 7, a side of the rain-shedding sheet 5 is connected to the car body 3, the other side of the rain-shedding sheet 5 is provided with a hook 71, and an upper rim of the door frame 4 is provided with a loop 72. When the rain-shedding sheet 5 is not used, it can be collected into the box 7; whereas, when the rain-shedding sheet 5 is needed, it can be set up completely only by engaging the hook 71 at one side of the rain-shedding sheet 5 with the loop 72 on the upper rim of the door frame 4.

Referring to all the drawings, the present invention is actually provided with following advantages when compared with the prior art, upon using.

The rain-shedding sheet 5 of the rain-shedding device 2 is installed between the car body 3 and the door frame 4. By opening and closing the door frame 4, the pie-shape expansion and collection can be formed, such that when in the rainy day, people will not get wet while opening the door to get into or off the car. In addition, on or inside the car body 3 the rolling device 6 can be further fixed, one side of the rain-shedding sheet 5 is fixed at the rolling device 6, the other side of the rain-shedding sheet 5 is provided with the hook 61, and the upper rim of the door frame 4 is provided with the loop 62. When the rain-shedding device 2 is not used, the rain-shedding sheet 5 can be elastically rolled into the rolling device 6; whereas, when the rain-shedding device 2 is needed, the rain-shedding sheet 5 can be set up completely only by engaging the hook 61 with the loop 62 on the upper rim of the door frame 4. By the rolling device 6, when the door is closed, the rain-shedding sheet 5 can be rolled back into the rolling device 6 elastically, so as to prevent from being damaged.

It is of course to be understood that the embodiments described herein is merely illustrative of the principles of the invention and that a wide variety of modifications thereto may be effected by persons skilled in the art without departing from the spirit and scope of the invention as set forth in the following claims.

## Claims

1. A car-use rain-shedding device, being connected between a default door frame 4 and a default body 3 of an automobile, comprising a rain-shedding sheet 5, a side of which is connected to the default door frame 4, the other side of which is connected between the default car body 3, such that by opening and closing the default door frame 4, expansion and collection in a pie-shape are formed.

2. The car-use rain-shedding device according to claim 1, wherein two sides of the rain-shedding sheet 5 are connected respectively to upper rims of the door frame 4 and the car body 3.

3. The car-use rain-shedding device according to claim 1, wherein two sides of the rain-shedding sheet 5 are connected to the door frame 4 and the car body 3 by snaps, hooks, chains, buttons, bands or Velcro tapes 51.

4. The car-use rain-shedding device according to claim 1, wherein the door frame 4 is further provided with a window visor 41 which is connected to the rain-shedding sheet 5.

5. The car-use rain-shedding device according to claim 4, wherein the rain-shedding sheet 5 is connected to the window visor 41 by snaps, hooks, chains, buttons, bands or Velcro tapes 51.

6. The car-use rain-shedding device according to claim 1, wherein the rain-shedding device 2 is further provided with a rolling device 6 which is connected to the car body 3 and is elastically rolled with the rain-shedding sheet 5.

7. The car-use rain-shedding device according to claim 6, wherein the other side of the rain-shedding sheet 5 is connected to the door frame 4.

8. The car-use rain-shedding device according to claim 7, wherein the rain-shedding sheet 5 and the door frame 4 are connected by snaps, hooks, chains, buttons, bands or Velcro tapes 51.

9. The car-use rain-shedding device according to claim 1, wherein the rain-shedding sheet 5 is plastic cloth, rubber cloth or water-proof cloth.

10. The car-use rain-shedding device according to claim 1, wherein the rain-shedding device 5 is further provided with a box 7 on a top or inside the car body 3, and the rain-shedding sheet 5 is collected in the box 7.
